# EUROPÄISCHE PATENTSCHRIFT

(11) **EP 2 129 480 B1**
(45) Veröffentlichungstag und Bekanntmachung des Hinweises auf die Patenterteilung: **18.06.2014**
(21) Anmeldenummer: 08716393.7
(22) Anmeldetag: 10.03.2008
(51) Int. Cl.: B22C 9/10, B22D 19/00, F02F 1/10, F16J 10/04

(54) **ANORDNUNG UND VERFAHREN ZUM DRUCKGIESSEN EINES ZYLINDERKURBELGEHÄUSES**
SYSTEM AND METHOD FOR THE PRODUCTION OF A CYLINDER CRANKCASE
DISPOSITIF ET PROCÉDÉ DE FABRICATION D`UN CARTER-MOTEUR

(30) Priorität: 23.03.2007 DE 102007014146
(43) Veröffentlichungstag der Anmeldung: 09.12.2009
(73) Patentinhaber: Daimler AG, 70327 Stuttgart (DE)
(72) Erfinder: GRAF, Erik, 70327 Stuttgart (DE); FISCHER, Gebhard, 73630 Remshalden (DE); SOELL, Guido, 73660 Urbach (DE)
(74) Vertreter: JENSEN & SON
(86) Internationale Anmeldenummer: PCT/EP2008/001883
(87) Internationale Veröffentlichungsnummer: WO 2008/116556

(56) Entgegenhaltungen:
- EP-A- 0 438 545
- EP-B1- 0 438 545
- DE-A1- 4 230 584
- DE-A1- 10 221 675
- US-A- 4 446 906

## Beschreibung

Die Erfindung betrifft eine Anordnung zum Druckgießen nach Anspruch 1 und ein Verfahren zur Herstellung eines Zylinderkurbelgehäuses nach Anspruch 9.

Zylinderkurbelgehäuse in modernen Motoren sind hohen mechanischen und thermischen Belastungen ausgesetzt. Daher verläuft um eine Zylinderlaufbuchse in der Regel ein Wassermantel, der zur Kühlung, insbesondere der Zylinderlaufbahn dient. Dieser Wassermantel ist bei Kurbelgehäusen, die in einem Druckgießverfahren hergestellt werden oben (zylinderkopfseitig) offen. Dies wird als "open deck" Bauweise bezeichnet. Der zylinderkopfseitig offene Wassermantel resultiert daher, dass im metallischen Druckgießwerkzeug Kerne oder bewegliche Schieber eingesetzt werden, die nach dem Gießen den Wassermantel im Kurbelgehäuse abbilden. Die Kerne oder Schieber müssen vor dem Öffnen des Kurbelgehäuses herausgezogen werden, weshalb keine Hinterschneidungen dem Herausziehen entgegenstehen dürfen. Deshalb können mit dieser Technik auch keine geschlossenen Räume dargestellt werden.

Der offene Wassermantel führt zu einer Begrenzung der mechanischen Belastbarkeit der Motoren. Besser wäre daher ein zumindest teilweise geschlossener Wassermantel ("closed deck-Bauweise), der jedoch im herkömmlichen Druckgussverfahren aus den oben genannten Gründen nicht darstellbar ist. In der US 4, 446, 906 wird die Verwendung eines Salzkernes beschrieben, die die Herstellung eines closed deck Kurbelgehäuses im Druckgießverfahren grundsätzlich ermöglicht. Hierzu wird um die Zylinderlaufbuchse ein zusätzlicher Ring gelegt, der den Salzkern im Abstand hält und im Werkzeug positioniert. Die Positionierung durch den Ring ist aufwändig und führt in der Praxis jedoch zu einer hohen Ausschussquote, da der Salzkern aufgrund unterschiedlicher thermischer Ausdehnungen von Salz, Ring und Gießwerkzeug hohen Biegebelastungen ausgesetzt ist. Zudem ergibt dies eine nur unzureichende metallische Verbindung zwischen Ring, Gussmaterial und der Zylinderlaufbuchse.

Die EP 0438545 B1 offenbart einen verlorenen Sand-Kern für die Herstellung eines Zylinderwassermantels in einem Zylinderblock. Der Sandkern ist ein hohler Kegel mit einem Ausdrückteil auf der engeren Seite. Mittels eines einwärts gerichteten Flansches wird der Sandkern in der Gussform gehalten.

Die Aufgabe der Erfindung besteht darin, eine Gießanordnung und ein Verfahren zur Herstellung eines Zylinderkurbelgehäuses in closed deck-Bauweise bereitzustellen, welche gegenüber dem Stand der Technik eine höhere Stabilität und eine höhere Prozesssicherheit aufweisen.

Die Lösung der Aufgabe besteht in einer Druckgießanordnung mit den Merkmalen des Anspruchs 1 und in einem Verfahren zur Herstellung eines Zylinderkurbelgehäuses mit den Merkmalen des Anspruchs 9.

Der erfindungsgemäße Anspruch 1 umfasst dabei ein Druckgießwerkzeug zur Herstellung eines Zylinderkurbelgehäuses mit einem Salzkern und mindestens einer Zylinderlaufbuchse, wobei die Zylinderlaufbuchse ein oberes, zylinderkopfseitiges Ende aufweist und ein unteres kurbelwellenseitiges Ende aufweist und die Zylinderlaufbuchse auf mindestens einer am Druckgusswerkzeug angeordneten Pinole gelagert ist und der Salzkern die Zylinderlaufbuchse zumindest teilweise mantelförmig umgibt. Die Erfindung zeichnet sich dabei dadurch aus, dass der Salzkern an einem Ende fest im Druckgusswerkzeug aufliegt und dadurch, dass der Kern unterhalb des zylinderkopfseitigen Endes der Zylinderlaufbuchse vertikal verlaufende Öffnungen aufweist.

Dadurch, dass der Kern auf einem Ende, in der Regel auf dem zylinderkopfseitigen Ende der Zylinderlaufbuchse aufliegt, wird die Stabilität des Kernes während des Gießvorgangs erhöht. Der Salzkern ist hierdurch fixiert und bedarf keiner weiteren fixierenden Hilfsmittel, wie beispielsweise in Form eines Stützrings wie aus der US 4, 446, 906 bekannt. Die Öffnungen unterhalb des zylinderkopfseitigen Endes der Zylinderlaufbuchse dienen dazu, dass sie mit Gießmetall durchflossen werden können. Das Gießmetall bildet nach dem Erstarren metallische Stege, die durch den Wassermantel (gebildet durch den Kern) ragen und die die Zylinderlaufbuchse mit dem Umguss, also der Wand des Zylinderkurbelgehäuses verbinden. Hierdurch wird eine closed deck-Bauweise realisiert und die Stabilität des Kurbelgehäuses erhöht.

Durch die besondere Anordnung und Fixierung des Salzkerns ist es möglich auch größere und komplexer geformte Salzkerne zu verwenden. Mit der Erfindung lassen sich auch zusammenhängende Salzkerne für Mehrzylinder-Kurbelgehäuse zuverlässig verwenden.

Diese vorteilhaften Eigenschaften werden durch die Gießanordnung nach Anspruch 1 und durch das Verfahren zur Herstellung eines Zylinderkurbelgehäuses nach Anspruch 9 realisiert. Weitere vorteilhafte Ausgestaltungsformen ergeben sich aus den Unteransprüchen.

Im Weiteren werden Beispiele der Erfindung sowie weitere vorteilhafte Merkmale der Erfindung an Hand der folgenden Figuren näher erläutert, dabei zeigen:
- Fig. 1: einen herauslösbaren Kern zum Einlegen in ein Druckgießwerkzeug,
- Fig. 2: ein Zylinderkurbelgehäuse in gemischter open/closed-deck Bauweise mit einem eingegossenen Kern,
- Fig. 3: ein Zylinderkurbelgehäuse in closed deck-Bauweise mit herausgelöstem Salzkern,
- Fig. 4: einen Schnitt durch ein Zylinderkurbelgehäuse entlang der Linie IV in Fig. 3,
- Fig. 5: einen Schnitt durch ein Zylinderkurbelgehäuse entlang der Linie V in Fig. 3,
- Fig. 6: eine schematische Darstellung eines einzelnen Kernes mit konischer Verjüngung und
- Fig. 7: einen Schnitt durch den Kern entlang der Linie VII in Fig. 6.
- Fig. 8: einen Schnitt entlang der Längsachse durch einen den Salzkern mit eingesetzter Zylinderlaufbuchse
- Fig. 9: einen Salzkern mit eingesetzter Zylinderlaufbuchse

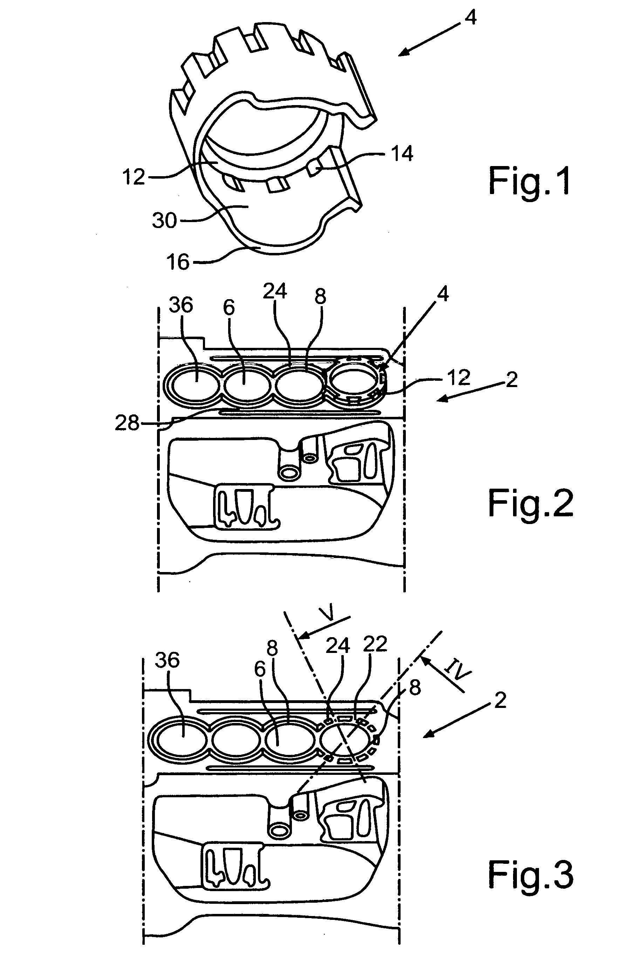

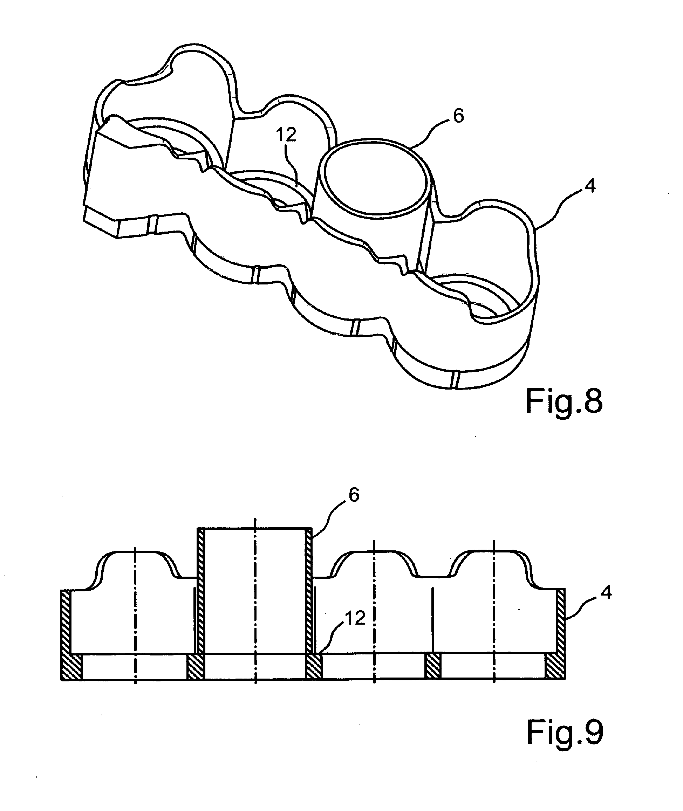

Zur Herstellung eines Zylinderkurbelgehäuses 2 in der closed deck-Bauweise werden entsprechend der Zylinderzahl des herzustellenden Motors Zylinderlaufbuchsen 6 auf (nicht dargestellte) Pinolen gesetzt. Pinolen sind zylinderförmige Träger (Schieber), die bezüglich des (ebenfalls nicht dargestellten) Gießwerkzeuges bewegbar sind. Dies ist beispielhaft für ein 4-Zylinderkurbelgehäuse in Fig. 8 und 9 dargestellt, wo der zusammenhängende Salzkern (4) in Position 2 eine Zylinderlaufbuchse (6) enthält. Im Gießwerkzeug wird der Salzkern (4) -in der Ausrichtung gemäß Fig. 8 von unten- durch das Gießwerkzeug abgestützt, so dass der Kranz (12) zu einer beiseitigen Fixierung des Salzkerns (4) führt. Nach dem Gießen werden die Pinolen aus dem Gießwerkzeug herausgezogen und der Hohlraum, der den Zylinderraum bildet, wird freigegeben. Bei herkömmlichen Druckgießwerkzeugen wird ein zusätzlicher Schieber angewendet, der um die Zylinderlaufbuchsen 6 herum einen Wassermantel 24 ausbildet. Der Wassermantel 24 ist jedoch zu einem Zylinderkopf hin offen, wie dies bei den drei linken Zylinderbohrungen 36 der Figuren 2 und 3 der Fall ist (open deck). Es besteht somit ein Spalt in Form des offenen Wassermantels 24 zwischen der Zylinderlaufbuchse 6 und einer Gehäusewand 28, der nachteilig für die mechanische Belastbarkeit des gesamten Motors ist. Diese Nachteile müssen durch aufwändige Gegenmaßnahmen kompensiert werden.

Zur Problemlösung wird anstelle des (nicht dargestellten) beweglichen Wassermantelschiebers oder Kerns ein Salzkern 4 gemäß der Fig. 1 in das Druckgießwerkzeug eingelegt. Dieser Salzkern 4 ist selbstverständlich für alle Zylinderlaufbuchsen vorgesehen, in den vorliegenden Figuren 1 - 3 wird jedoch zu Vergleichszwecken lediglich ein Einzelkern abgebildet. Der Salzkern 4 besteht aus an sich bekannten Salzen, insbesondere Na- und/oder KCl. Er setzt sich im Wesentlichen aus einem Salz und verschiedenen Bindemitteln zusammen. In bevorzugter Ausgestaltung beinhalten die Bindemittel säurelösliche Alkali- oder Erdalkalicarbonate. Der Salzkern 4 wird beispielsweise durch ein Kernschießverfahren, insbesondere ein Pressverfahren hergestellt. Hierfür gibt es spezielle Kernwerkzeuge, die derart ausgestaltet sein können, dass entsprechend der Anzahl der Zylinder die korrespondierende Anzahl von Kernen in einen integralen Kernbauteil gepresst werden. Gegebenenfalls wird der Salzkern noch getrocknet oder gesintert.

Der Salzkern 4 gemäß Fig. 1 weist einen Kranz 12 auf, der sich im zylinderkopfseitigen Bereich einem Kernmantel anschließt. Der Salzkern 4 wird in der Art auf die Zylinderlaufbuchse 6 gesetzt, dass der Kranz 12 ein zylinderkopfseitiges Ende 8 der Zylinderlaufbuchse 6 bedeckt. Auf diese Weise ist der Salzkern 4 sowohl mit der Zylinderlaufbuchse 6 als auch mit dem Druckgießwerkzeug verbunden. Der Kern ist somit (im Gegensatz zum US 4, 446, 906) abgestützt und hält so den sehr hohen Druck während des Gießvorgangs stand ohne zu zerbrechen. Ein Kernmantel 30 verläuft in einem Abstand von einigen Millimetern konzentrisch zur Zylinderlaufbuchse 6. An einem kurbelwellenseitigen Bereich des Salzkerns 4 weist der Kernmantel eine kurvenförmige untere Begrenzungslinie 16 auf. Die Begrenzungslinie 16 könnte auch stufig oder dergleichen ausgestaltet sein.

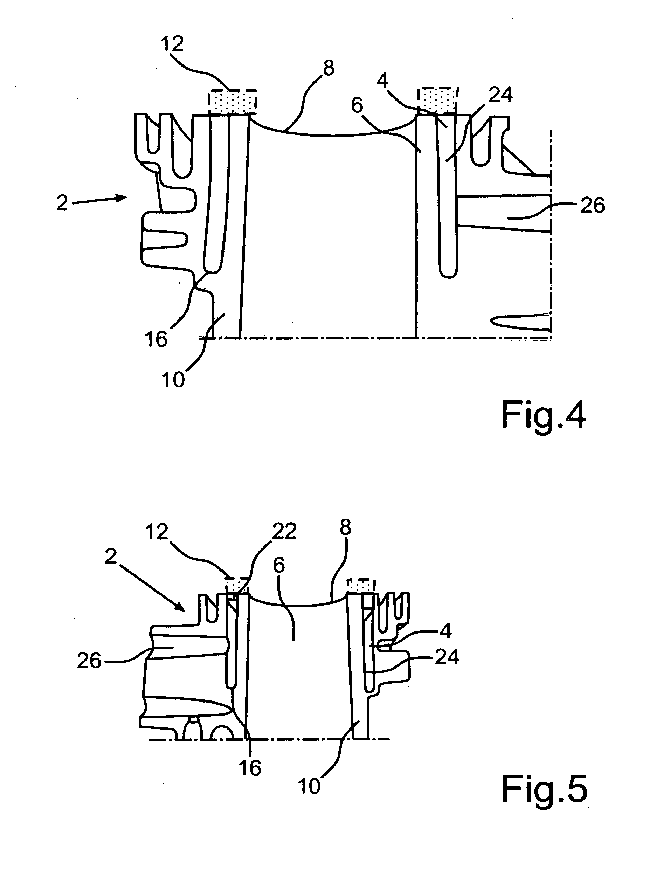

In Fig. 2 ist ein Kurbelgehäuse 2 dargestellt, in dem ein Kern nach Fig. 1 eingegossen ist. Der Kranz 12 des Salzkerns 4 ist noch über dem zylinderkopfseitigen Ende 8 der linken Zylinderlaufbuchse 6 zu erkennen. Nach dem Gießvorgang wird der Salzkern 4 durch ein flüssiges Medium, z. B. mit Wasser herausgelöst. Der Kern zerfällt dabei in seine Granulatbestandteile und wird durch das Wasser herausgewaschen. Werden als Bindemittel Carbonat-Salze verwendet, so werden bevorzugt leicht saure, insbesondere Salz- oder Carbonsäure-haltige wässrige Waschlösungen verwendet. Das Kernmaterial kann beispielsweise durch den Kanal 26 (Fig. 4 und 5) des Zylinderkurbelgehäuses herausgewaschen werden. Nach dem Herauswaschen bleiben metallische Stege 22 am zylinderkopfseitigen Ende 8 der Zylinderlaufbuchse 6 stehen, die den Wassermantel 24 durchqueren und diesen teilweise zum Zylinderkopf (nicht dargestellt) hin verschließen (Fig. 3). Man spricht hierbei von einem closed deck Zylinderkurbelgehäuse.

Die metallischen Stege 22 entstehen, indem durch vertikale Öffnungen 14 im Salzkern 4 Gießmetall fließt und erstarrt. Die Öffnungen 14 sind direkt unterhalb des zylinderkopfseitigen Endes 8 der Zylinderlaufbuchse 6 angeordnet. Die Geometrie der Stege 22 und deren Anzahl hängt somit von der Art der Öffnung 14 im Salzkern 4 ab. Auf deren Ausgestaltung wird später noch eingegangen werden.

In Fig. 3 sind zwei Schnittlinien IV und V dargestellt, wobei die Linie IV durch den freien Wassermantel 24 verläuft und dieser Schnitt schematisch in Fig. 4 dargestellt ist. Die Linie V verläuft durch zwei metallische Stege 22, was mit der Darstellung in Fig. 5 korreliert. In dem Schnitt nach Fig. 4 ist der Wassermantel 24 zum Zylinderkopf hin offen, was eine Verbindung der Wasserkreisläufe vom Zylinderkopf und vom Kurbelgehäuse ermöglicht. Der Kern ist in dieser Darstellung noch im gegossenen Kurbelgehäuse enthalten. Zur besseren Veranschaulichung der Anordnung des Kerns im Druckgießwerkzeug bzw. im Kurbelgehäuse, ist der Kranz 12 des Salzkerns 4 oberhalb der Zylinderlaufbuchse in gestrichelter Linie dargestellt, obwohl er in diesem aufgeschnittenen Zustand des Kurbelgehäuses 2 bereits entfernt wurde. In der Schnittdarstellung nach Fig. 5 ist der Salzkern 4 bereits aus dem Kurbelgehäuse 2 herausgelöst worden, der Wassermantel 24, der am zylinderkopfseitigen Ende 8 der Zylinderlaufbuchse 6 von den Stegen 22 bedeckt wird, ist nun freigelegt. Das Granulat ist durch den Kanal 26 abgelaufen. Auch in dieser Darstellung ist zu weitergehendem Verständnis die ursprüngliche Lage des Kranzes 12 oberhalb der Zylinderlaufbuchse 6 durch eine gestrichelte Linie markiert.

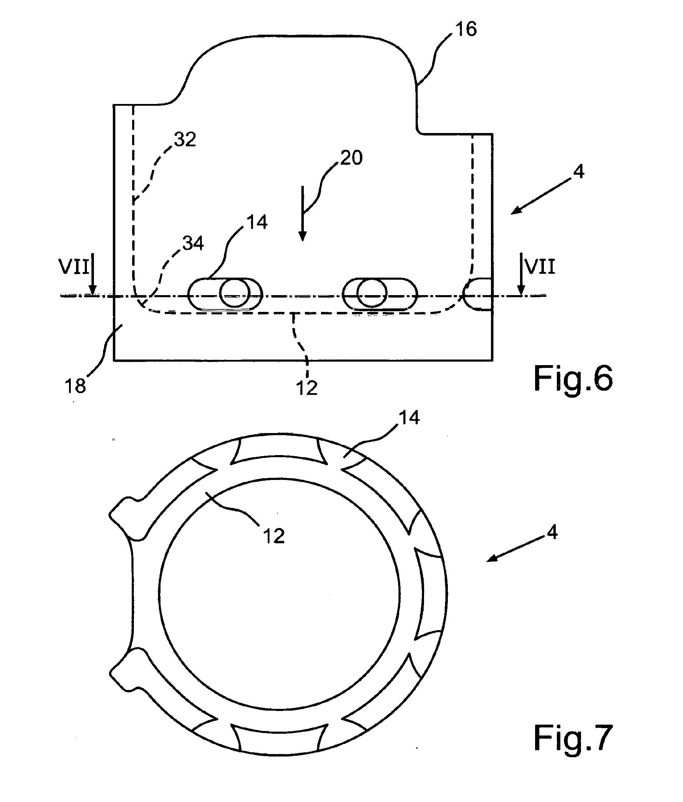

Im Weiteren wird an Hand der Figuren 6 und 7 auf eine zweckmäßige Geometrie des Kernes 12 eingegangen. Die vertikalen Öffnungen 14 sind in den Figuren 6 und 7 in Form Pendelbohrungen ausgestaltet, die sich ähnlich wie Schießscharten von außen nach innen verengen. Es können jedoch auch Langlöcher senkrecht nach innen verlaufenden Wandungen zweckmäßig sein. Der Kern 4 nach Fig. 1 weist in etwa rechteckige Öffnungen 14 auf. Die Aussparung im Bereich des Kranzes 12 sind bei diesem Kern durch das Kernpresswerkzeug bedingt. Die Geometrie der Öffnungen kann in weiten Grenzen an die Erfordernisse der zu bildenden Stege angepasst werden.

Es hat sich ebenfalls herausgestellt, dass es zu einer besseren Kernstabilität während des Gießvorganges beiträgt, wenn eine Außenkontur 18 des Kerns 6 insbesondere des Bereichs des Kranzes 12 sich konisch verjüngt, wie dies in Fig. 6 dargestellt ist. Ferner ist es zur Vermeidung von Spannungsspitzen zweckmäßig, eine Kerninnenkontur 32 in der Art auszugestalten, dass sie im Übergangsbereich zum Kranz 12 eine leichte (hier übertrieben dargestellte) Abrundung in Form eines Radius 34 aufweist.

Zum Gießverfahren sei noch angemerkt, dass es sich in der Regel um einen Aluminium- oder Magnesium-Druckguss handelt. Es ist auch eine Kombination aus beiden Metallen möglich.

Die Zylinderlaufbuchsen werden in der Regel aus mehreren zu einem Bauteil zusammen gegossenen Zylinderlaufbuchsen hergestellt. Dieser werden dann mit dem Salzkern, zusammen mit den Buchsen in das Druckgießwerkzeug eingelegt wird. Fig. 8 und Fig. 9 zeigen ein Linerpaket, mit nur einer einzigen Zylinderlaufbuchse. Das Kurbelgehäuse kann dabei aus einer hochfesten Aluminiumlegierung, beispielsweise einer übereutektischen Al/Si-Legierung oder auch aus Grauguss bestehen. Das eigentliche Kurbelgehäuse wird anschließend aus ein er Leichtmetalllegierung, insbesondere einer leichten Magnesiumlegierung oder einer weiteren Aluminiumlegierung gegossen. Grundsätzlich können die Zylinderlaufbuchsen 6 auch aus Grauguss, anderen Speziallegierungen oder Verbundwerkstoffen, wie beispielsweise Al/Al₂O₃/Si-Verbundwerkstoffen bestehen.

### Bezugszeichenliste

- 2: Zylinderkurbelgehäuse
- 4: Salzkern
- 6: Zylinderlaufbuchse
- 8: zylinderkopfseitiges Ende
- 10: kurbelwellenseitiges Ende
- 12: Kranz des Kernes
- 14: vertikale Öffnung
- 16: untere Begrenzungslinie
- 18: Außenkontur des Kernes
- 20: zylinderkopfseitige Richtung
- 22: metallische Stege
- 24: Wassermantel
- 26: Kanal
- 28: Gehäusewand
- 30: Kernmantel
- 32: Innenkontur Kern
- 34: Radius
- 36: Zylinderbohrung

## Patentansprüche

1. Anordnung zum Druckgießen eines Zylindergehäuses (2) mit einem Salzkern (4) und mindestens einer Zylinderlaufbuchse (6), wobei die Zylinderlaufbuchse (6) ein oberes, zylinderkopfseitiges Ende (8) aufweist und ein unteres kurbelwellenseitiges Ende (10) aufweist und die Zylinderlaufbuchse (6) auf mindestens einer am Druckgusswerkzeug angeordneten Pinole gelagert ist und der Salzkern (4) die Zylinderlaufbuchse (6) zumindest teilweise mantelförmig umgibt,
**dadurch gekennzeichnet,**
**dass** der Salzkern (4) einen Kranz (12) aufweist, der auf einem der Enden (8, 10) der Zylinderlaufbuchse (6) zumindest teilweise aufliegt und der Kern (4) unterhalb des zylinderköpfseitigen Endes (8) der Zylinderlaufbuchse (6) vertikal verlaufende Öffnungen (14) aufweist.

2. Anordnung zum Druckgießen nach Anspruch 1,
**dadurch gekennzeichnet,**
**dass** der Kranz (12) am zylinderkopfseitigen Ende (8) der Zylinderlaufbuchse (6) und einer Begrenzungswand des Druckgießwerkzeugs fixiert ist.

3. Anordnung zum Druckgießen nach Anspruch 1 oder 2,
**dadurch gekennzeichnet,**
**dass** der Salzkern (4) sowohl mit der Zylinderlaufbuchse (6) als auch mit einer Werkzeuginnenwand in Verbindung steht.

4. Anordnung zum Druckgießen nach Anspruch 3,
**dadurch gekennzeichnet,**
**dass** der Kranz an der Werkzeuginnenwand anliegt.

5. Anordnung zum Druckgießen nach einem der vorhergehenden Ansprüche,
**dadurch gekennzeichnet,**
**dass** der Salzkern (4) kurbelwellenseitig an der Werkzeuginnenwand anliegt.

6. Anordnung zum Druckgießen nach einem der vorhergehenden Ansprüche,
**dadurch gekennzeichnet,**
**dass** eine untere Begrenzungslinie (16) des Salzkerns (4) kurbelwellenseitig eine kurvenförmige oder stufenförmige Form aufweist.

7. Anordnung zum Druckgießen nach einem der vorhergehenden Ansprüche,
**dadurch gekennzeichnet,**
**dass** sich eine Außenkontur (18) des Kernes in zylinderkopfseitiger Richtung (20) konisch verjüngt.

8. Anordnung zum Druckgießen nach einem der vorhergehenden Ansprüche,
**dadurch gekennzeichnet,**
**dass** die Öffnungen(14) im Salzkern (4) sich von außen nach innen verengen.

9. Verfahren zur Herstellung eines Zylinderkurbelgehäuses,
umfassend folgende Schritte
- Aufsetzen einer Zylinderlaufbuchse (6) auf einer Pinole eines Druckgießwerkzeugs,
- Positionieren eines Salzkerns, welcher vertikale Öffnungen (14) aufweist, im Druckgießwerkzeug so, dass
○ ein Kranz (12) des Salzkerns (4) auf einem Ende (8, 10) der Zylinderlaufbuchse (6) aufliegt und
○ die vertikalen Öffnungen (14) des Kerns (6) unterhalb eines zylinderkopfseitigen Endes (8) der Zylinderlaufbuchse (6) angeordnet sind,
- Eingießen eines Gießmetalls unter erhöhtem Druck,
- Erstarren des Gießmaterials und Herauslösen des Salzkerns.

## Claims

1. Arrangement for die-casting a cylinder housing (2) with a salt core (4) and at least one cylinder liner (6), wherein the cylinder liner (6) has an upper, cylinder head-side, end (8) and a lower, crankshaft-side, end (10) and the cylinder liner (6) is mounted on at least one sleeve located on the die-casting tool and the salt core (4) surrounds the cylinder liner (6) at least partially in the manner of a jacket,
**characterised in that**
the salt core (4) has a rim (12) which at least partially lies on one of the ends (8, 10) of the cylinder liner (6) and the core (4) has openings (14) which extend vertically below the cylinder head-side end (8) of the cylinder liner (6).

2. Arrangement for die-casting according to claim 1,
**characterised in that**
the rim (12) is secured to the cylinder head-side end (8) of the cylinder liner (6) and to a boundary wall of the die-casting tool.

3. Arrangement for die-casting according to claim 1 or 2,
**characterised in that**
the salt core (4) is connected both to the cylinder liner (6) and to an inner wall of the tool.

4. Arrangement for die-casting according to claim 3,
**characterised in that**
the rim lies against the inner wall of the tool.

5. Arrangement for die-casting according to any of the preceding claims, **characterised in that**
the salt core (4) lies against the inner wall of the tool on the crankshaft side.

6. Arrangement for die-casting according to any of the preceding claims,
**characterised in that**
a lower boundary line (16) of the salt core (4) has an arcuate or stepped shape on the crankshaft side.

7. Arrangement for die-casting according to any of the preceding claims,
**characterised in that**
an external contour (18) of the core tapers conically in the direction (20) towards the cylinder head.

8. Arrangement for die-casting according to any of the preceding claims,
**characterised in that**
the openings (14) in the salt core (4) taper from the outside towards the inside.

9. Method for producing a cylinder block, comprising the following steps:
- the fitting of a cylinder liner (6) to a sleeve of a die-casting tool,
- the positioning of a salt core having vertical openings (14) in the die-casting tool, so that
○ a rim (12) of the salt core (4) lies on an end (8, 10) of the cylinder liner (6) and
○ the vertical openings (14) of the core (4) are located below a cylinder head-side end (8) of the cylinder liner (6)
- the pouring-in of a casting metal under raised pressure,
- the solidification of the casting material and the removal of the salt core.

## Revendications

1. Agencement destiné à la coulée sous pression d'un carter d'embiellage (2) comportant un noyau de sel (4) et au moins une douille de cylindre (6), la douille de cylindre (6) présentant une extrémité (8) supérieure côté cylindre et une extrémité (10) inférieure côté vilebrequin et la douille de cylindre (6) étant montée sur au moins un fourreau disposé sur l'outil de coulée sous pression et le noyau de sel (4) entourant sous la forme d'une enveloppe au moins partiellement la douille de cylindre (6), **caractérisé en ce que** le noyau de sel (4) présente une couronne (12) qui s'appuie au moins partiellement sur l'une des extrémités (8, 10) de la douille de cylindre (6) et le noyau présente sous l'extrémité côté tête de cylindre (8) de la douille de cylindre (6) des ouvertures (14) s'étendant à la verticale.

2. Agencement destiné à la coulée sous pression selon la revendication 1, **caractérisé en ce que** la couronne (12) est fixée sur l'extrémité côté tête de cylindre (8) de la douille de cylindre (6) et d'une paroi de limitation de l'outil de coulée sous pression.

3. Agencement destiné à la coulée sous pression selon la revendication 1 ou la revendication 2, **caractérisé en ce que** le noyau de sel (4) est reliée non seulement à la douille de cylindre (6) mais aussi à une paroi intérieure de l'outil.

4. Agencement destiné à la coulée sous pression selon la revendication 3, **caractérisé en ce que** la couronne s'appuie sur la paroi intérieure de l'outil.

5. Agencement destiné à la coulée sous pression selon l'une quelconque des revendications précédentes, **caractérisé en ce que** le noyau de sel (4) s'appuie coté vilebrequin sur la paroi intérieure de l'outil.

6. Agencement destiné à la coulée sous pression selon l'une quelconque des revendications précédentes, **caractérisé en ce qu'**une ligne inférieure de délimitation (16) du noyau de sel (4) présente côté vilebrequin une forme curviligne et à gradins.

7. Agencement destiné à la coulée sous pression selon l'une quelconque des revendications précédentes, **caractérisé en ce qu'**un contour extérieur (18) du noyau se rétrécie de manière conique dans la direction côté tête de cylindre (20).

8. Agencement destiné à la coulée sous pression selon l'une quelconque des revendications précédentes, **caractérisé en ce que** les ouvertures (14) dans le noyau de sel (4) se rétrécissent de l'extérieur vers l'intérieur.

9. Procédé destiné à la fabrication d'un bloc moteur comprenant les étapes suivantes :
- montage d'une douille de cylindre (6) sur un fourreau d'un outil de coulée sous pression,
- positionnement d'un noyau de sel (4) qui présente des ouvertures (14) verticales dans un outil de coulée sous pression de telle sorte qu'une couronne (12) du noyau de sel (4) s'appuie sur une extrémité (8, 10) de la douille de cylindre (6) et que les ouvertures (14) verticales du noyau (6) sont disposées sous une extrémité (8) de la douille de cylindre (6) côté tête de cylindre (8),
- coulage d'un métal en fusion sous haute pression,
- solidification du matériau en fusion et élimination du noyau de sel.
